# NEUE EUROPÄISCHE PATENTSCHRIFT

(11) **EP 1 533 531 B2**
(45) Veröffentlichungstag und Bekanntmachung des Hinweises auf die Entscheidung über den Einspruch: **30.11.2011**
(45) Hinweis auf die Patenterteilung: 13.06.2007
(21) Anmeldenummer: 04026376.6
(22) Anmeldetag: 05.11.2004
(51) Int. Cl.: F16B 33/00

(54) **Verfahren zur Herstellung einer feuchtigkeitsdichten Verschraubung**
Method for manufacturing a moisture-proof screw fastening assembly
Procédé de fabrication d'un assemblage par vissage étanche à l'humidité

(30) Priorität: 21.11.2003 DE 10354742
(43) Veröffentlichungstag der Anmeldung: 25.05.2005
(73) Patentinhaber: WAREMA Renkhoff GmbH, D-97828 Marktheidenfeld (DE)
(72) Erfinder: Bauer, Jürgen, 97842 Karbach (DE); Ruckstetter, Günter, 97851 Rothenfels (DE)
(74) Vertreter: Erb, Henning

(56) Entgegenhaltungen:
- EP-A- 1 122 448
- DE-A1- 4 015 771
- DE-C1- 4 427 045
- DE-T2- 69 114 017
- DE-U- 8 514 439
- US-A- 2 203 294
- US-A- 2 724 303
- US-A- 3 355 205
- US-A- 4 657 460
- US-A- 4 987 714

## Beschreibung

Die vorliegende Erfindung befaßt sich mit einem Verfahren zum Herstellen einer Verschraubung zum feuchtigkeitsdichten Anbringen von Elementen an Profilen, Hohlprofilen, Platten oder dergleichen, die z. B. aus Holz, Kunststoff, Aluminium oder anderen Metallen bestehen, mittels einer Verschraubung, die wenigstens aus Schrauben, die im Gewinde- und/oder Schaftbereich wenigstens teilweise mit einer Beschichtung versehen sind, dem anzubringenden Element und Einschraublöchern besteht und entsprechend der Materialart Holz-, Blech- , Kunststoffschrauben oder selbstschneidende Schrauben unmittelbar an dem jeweiligen Gegenstand eingeschraubt werden.

Derartige Verschraubungen werden beispielsweise dort benötigt, wo die miteinander verschraubten Teile der Witterung ausgesetzt sind, wobei zur Vermeidung von Feuchtigkeitsschäden an nässeempfindlichen Materialien darauf geachtet werden muß, daß im Bereich der Schrauben keine Feuchtigkeit in beispielsweise ein Hohlprofil oder hinter eine Platte eindringen kann. Eine solche Problematik tritt beispielsweise bei der Anbringung von Führungselementen einer Sonnenschutzanlage an Fenster- oder Fassadenprofilen auf, wobei es bekannt ist, zur Feuchtigkeitsabdichtung entweder Gummiplatten zwischen die Grundplatten und das Hohlprofil einzulegen oder die Schrauben vor dem Eindrehen in ein dauerelastisches Abdichtungsmittel einzutauchen. Während die Gummiplättchen nicht immer das Eindringen von Feuchtigkeit entlang des Schraubenschaftes verhindern können, ist das Eintauchen der Schrauben in ein Abdichtungsmittel unhandlich und unsauber, wobei seitlich überquellendes Abdichtungsmittel die optische Erscheinung beeinträchtigen kann. Insgesamt wird der Montagevorgang bei dieser Vorgehensweise erheblich verzögert und wegen der umständlichen Vorgehensweise kann es leicht zu Montagefehlern kommen, beispielsweise dadurch, daß schlicht vergessen wird, einzelne Schrauben abzudichten.

Die US-A-4,987,714 beschreibt eine Verschraubung bei welcher eine Abdichtung durch Verschweißen einer thermoplastischen Umhüllung einer Schraube beim Eindrehen erreicht wird.

Die ähnlich gelagerte US-A-4,657,460 beschreibt eine beschichtete Schraube, wobei sich die bei Raumtemperatur feste Beschichtung bei Erwärmung während des Eindrehens verflüssigt und den Zwischenraum abdichtet.

Die EP 1 122 448 A1 beschreibt eine zur Verminderung der Reibung beim Eindrehen beschichtete Schraube.

Die DE 85 14 439 U beschreibt eine mit EPDM beschichtete Unterlegscheibe.

Die Aufgabe der vorliegenden Erfindung besteht darin, ein Verfahren zu schaffen, das bei einfacher Montage eine sichere Abdichtung im Bereich der eingedrehten Schrauben gewährt.

Erfindungsgemäß wird die Aufgabe durch ein Verfahren der eingangs beschriebenen Art gelöst, welches die Merkmale des Kennzeichenteils des Anspruchs 1 aufweist.

Das erfindungsgemäße Verfahren nutzt den Handhabungsvorteil einer zeitlich vor der Montage aufgebrachten Beschichtung wenigstens im Gewindebereich, beispielsweise bei der Herstellung der Schraube, so daß der Monteur die Schraube lediglich in das jeweilige Befestigungsloch eindrehen muß, wodurch gleichzeitig die Dichtwirkung hergestellt wird. Es hat sich überraschenderweise gezeigt, daß eine sehr gute und dauerhafte Dichtwirkung erreicht wird, obgleich das Dichtmaterial anders als beispielsweise bei der bekannten Verwendung beschichteter Maschinenschrauben, die in ein Gewinde eingedreht werden und im Bereich des Gewindes abdichten, beim Ablösen abgeschabt wird, wobei die Abdichtung im Bereich des Einschraubloches mit dem Schaft und/oder zwischen den miteinander zu montierenden Teilen erfolgt, d. h. es ist kein Zusammenwirken des Schraubenganges mit einem Gewinde über eine bestimmte Länge zum Abdichten erforderlich, wie es beim Eindrehen einer Blechschraube beispielsweise auch gar nicht vorhanden ist.

Nach dem Lösen einer Schraube kann eine erneute Abdichtung schlicht dadurch erreicht werden, daß eine neue Schraube mit der abdichtenden Beschichtung eingeschraubt wird, wobei sich der Vorgang des Abschälens und Abdichtens wiederholt.

Grundsätzlich sind verschiedene Materialien für die Beschichtung denkbar. Neben Dichtmaterialien, die auf Silikonbasis hergestellt sind und vor der Montage abbinden, sind auch Dichtmaterialien auf Polymerbasis, beispielsweise Polyacrylat, denkbar, wobei das Material in Lösung aufgebracht werden kann und anschließend getrocknet wird, oder es ist auch denkbar, die Beschichtung auf Teer-, Kautschuk- oder Harzbasis herzustellen, wobei der Vernetzungsvorgang vor der Montage abgeschlossen sein soll.

In einer bevorzugten Ausführungsform der Erfindung wird die Beschichtung nur teilweise über die Länge des Schraubenschaftes ausgeführt, wobei auch ein bestimmter Abstand zum Kopf der Schraube zweckmäßig sein kann. Insbesondere bei längeren Schrauben ist es oft hinreichend, die Schraube nur über eine bestimmte Länge des Schaftes mit der Beschichtung zu versehen, um die gewünschte Dichtwirkung zu erreichen und unnötige Materialansammlungen des Dichtmaterials im Fugenbereich zu vermeiden. Besonders gute Ergebnisse wurden mit einer Beschichtung erreicht, die sich in einem Abstand von ungefähr der Dicke des anzubringenden Elements vom Kopf ungefähr über 20 mm des Schaftes erstreckt.

Andererseits kann es auch zur Vermeidung eines aufwendigen Beschichtungsvorganges gelegentlich zweckmäßig sein, den Schraubenschaft vollständig zu beschichten.

Sofern ein Untergrund aus Holz Bestandteil der Verschraubung ist, ist in bevorzugter Weiterbildung der Erfindung vorgesehen, daß die Verschraubung wenigstens eine Holzschraube aufweist, wobei Teile des Beschichtungsmaterials nach dem Einschrauben wenigstens in den oberen Gewindegängen vorhanden sind. In Ergänzung zu dem sich um den Rand der Eindrehbohrung ansammelnden Dichtmaterials kann es bei Holz vorteilhaft sein, durch das verbleibende Dichtmaterial auch noch die oberen Gewindegänge abzudichten, damit ein Eindringen von Feuchtigkeit noch sicherer vermieden werden kann.

Bei Holzmaterial kann es auch vorteilhaft sein, daß unter einem an Holzmaterial anzubringenden Element eine Dichtscheibe aus EPDM unmittelbar auf der Holzoberfläche aufgelegt wird, um durch Unterbinden der Kapillarwirkung zwischen den eng aneinanderliegenden Flächen zu verhindern, daß Feuchtigkeit überhaupt in die Nähe der Einschraubbohrung gelangen kann. Das abgeschälte Dichtmaterial um die Bohrung schmiegt sich dabei eng an die Dichtscheibe aus EPDM an und kapselt die Bohrung sicher vor Feuchtigkeit.

Um sicherzugehen, daß keine Feuchtigkeit entlang des Schraubenschaftes durch die Dichtscheibe in die Bohrung eindringen kann, ist in einer weiter bevorzugten Ausführungsform der Erfindung vorgesehen, daß die Dichtscheibe vor dem Eindrehen der Schraube keine Durchgangsbohrung oder eine Durchgangsbohrung mit einem engen Durchmesser aufweist, der kleiner als der Außendurchmesser des Gewindeschaftes der Schraube und vorzugsweise kleiner oder gleich dem Kerndurchmesser des Gewindeschafts der Schraube ist.

In einer noch weiteren Ausgestaltung des erfindungsgemäßen Verfahrens wird eine EPDM-Dichtscheibe vorgesehen, die auf eine Metallscheibe aufgeklebt wird, die dem anzubringenden Element zugewandt ist und ein Durchgangsloch aufweist. Hierdurch läßt sich ein besonders gleichmäßiger Andruck der EPDM-Dichtscheibe an der Holzoberfläche erreichen.

Zur Vermeidung von Wasseransammlungen in der Form von Wasserbrücken zwischen dem Element und der Holzoberfläche ist eine Stärke der Dichtscheibe von wenigstens 4 mm bevorzugt, wobei gute Ergebnisse mit Dichtscheiben mit einer Stärke von 5 mm bis 7 mm erzielt worden sind.

Wie bereits erwähnt, eignet sich das erfindungsgemäße Verfahren besonders dazu, Teile von der Außenseite an Fassadenelemente, Profile, Fensterrahmen oder dergleichen anzuschrauben, beispielsweise die Führungsschienenhalter einer Raffstoreanlage oder Halter für sonstige Elemente, wie z. B. Seilspanner, wobei auch bei Schlagregen kein Eindringen von Feuchtigkeit mehr hinter die Fassadenblende, in die Hohlprofile oder in das Holz eines Fensterrahmens zu befürchten ist.

Nachfolgend wird anhand der beigefügten Zeichnungen näher auf ein Ausführungsbeispiel der Erfindung eingegangen. Es zeigen:
- Fig. 1: eine geschnittene Darstellung einer Verschraubung einer Führungsschienenhalterung an einem Hohlprofil eines Fensterrahmens;
- Fig. 2: eine Ansicht der bei der Verschraubung gemäß Fig. 1 eingesetzten Schraube;
- Fig. 3: eine skizzierte Darstellung des Bereiches der Verschraubung mit teilweise eingedrehter Schraube.

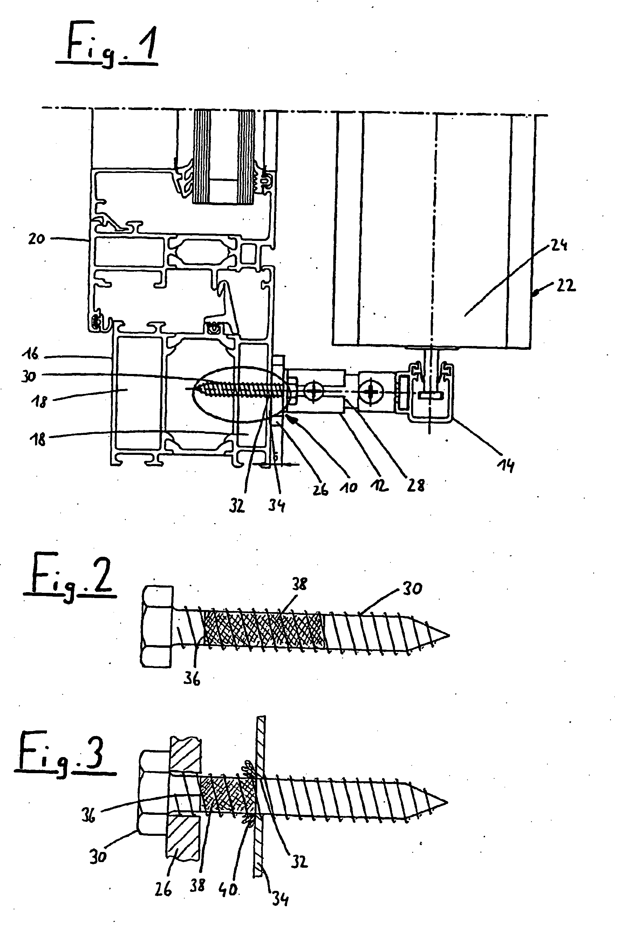

In Fig. 1 ist eine Verschraubung 10 zur Befestigung eines Halters 12 für eine Führungsschiene 14 an einem Fensterrahmen 16 gezeigt, der in üblicher Weise aus Hohlkammerprofilen 18 aufgebaut ist. Die Führungsschiene 14 sorgt gemeinsam mit einer auf der anderen Seite eines Fensters 20 angeordneten Führungsschiene für eine Führung eines Sonnenschutzbehangs 22, einer Sonnenschutzanlage, die im gezeigten Ausführungsbeispiel als Raffstoreanlage mit einem aus mehreren Lamellen 24 bestehenden Behang ausgebildet ist. Der Halter 12, der in bekannter Weise aus einer an der Außenfläche des Profils 18 anliegenden Grundplatte 26 und einem in seiner Länge verstellbaren Abstandselement 28 besteht, ist mit Hilfe einer Blechschraube 30 direkt in vorgebohrte Einschraublöcher 32 in den Wandungen 34 des Profiles 18 eingeschraubt.

Um das Eindringen von Feuchtigkeit in den hier beispielhaft als Aluminiumhohlprofil 18 ausgebildeten Fensterrahmen 16 zu verhindern, da es hierdurch zu einer langfristigen Beschädigung desselben kommen kann, ist es unbedingt erforderlich, im Bereich der Verschraubung eine Abdichtung vorzusehen. Zu diesem Zweck ist die Schraube 30 (siehe auch Fig. 2), die von ihrer Grundkonstruktion her eine herkömmliche Blechschraube ist, in einem bestimmten Gewindeabschnitt mit einer Beschichtung 38 versehen. Diese Beschichtung kann auf Polymer-, Harz-, Teer-, Kautschuk- oder Silikonbasis ausgebildet sein und befindet sich ggf. in einem ausgehärteten, abgebundenen oder getrockneten Endzustand, wenn die Schraube 30 in das Profil 18 eingedreht werden soll. Im Gegensatz zu ähnlichen Beschichtungen von Maschinenschrauben, die gezielt in ein Gewinde eingedreht werden, um innerhalb des Gewindes für eine Abdichtung zu sorgen, beispielsweise bei Stopfenschrauben, verbleibt die Beschichtung bei der gezeigten Verschraubung 10 nicht in wesentlichem Umfang am Gewindeschaft, sondern wird im Bereich des Einschraubloches 32 beim Eindrehen der Schraube abgeschält oder -geschabt (siehe Fig. 3), so daß es zu einer Anhäufung 40 von von dem Gewindeschaft der Schraube 30 abgelöstem Dichtmaterial um den Rand des Einschraubloches 32 kommt (siehe Fig. 3). Durch Festziehen der Schraube 30 bis zu dem in Fig. 1 gezeigten Zustand, in welchem die Grundplatte 26 flächig an der Außenfläche des Profils 18 anliegt, wird die Anhäufung 40 von Dichtmaterial komprimiert und sorgt für eine feuchtigkeitsdichte Abdichtung zwischen dem Einschraubloch 32 und dem Gewindeschaft der Schraube 30, wobei auch zwischen der Grundplatte 26 und dem Profil 18 eine Abdichtung erreicht wird. Das Dichtmaterial sorgt für eine dauerhafte Abdichtung in diesem Bereich, so daß auch bei Schlagregen kein Eindringen von Feuchtigkeit in das Hohlprofil 18 befürchtet werden muß. Wenn die Schraube 30 beispielsweise bei Reparaturmaßnahmen gelöst wird, kann das Dichtmaterial leicht entfernt werden, und durch Verwendung einer neuen Schraube (siehe Fig. 2) mit neuer Beschichtung 38 läßt sich nachfolgend wiederum die gewünschte Dichtwirkung erreichen.

Die gezeigte Verschraubung mit einer Schraube, deren Schaft teilweise mit einer Beschichtung aus Dichtmaterial versehen ist, kann auch zum Anbringen sonstiger Elemente auf anderen Werkstoffen dienen, wie z. B. an Kunststoffen oder Holz, die auch massiv ausgeführt sein können. In einem solchen Fall ist die Schraube entsprechend als Holzschraube, als zum Einschrauben in Kunststoff vorgesehene Schraube oder auch als selbstschneidende Schraube ausgebildet. Entscheidend ist, daß in gleicher Weise wie bei dem zuvor erläuterten Ausführungsbeispiel das Dichtmaterial beim Eindrehen der Schraube zu wesentlichen Teilen vom Gewindeschaft gelöst werden und sich um die Einschrauböffnung ansammeln kann. So kann beispielsweise auch ein massives Holzprofil geschützt werden, dessen Außenfläche mit einer entsprechenden Lasur behandelt ist. Durch die Abdichtung des Einschraubloches wird bei einem solchen Profil vermieden, daß Feuchtigkeit in Bereiche gelangen kann, die nicht durch die äußere Lasur geschützt sind, so daß ein Holzwerkstoff gegen ein Verfaulen von innen heraus geschützt ist.

Bei einer Verschraubung mit einem Holzuntergrund kann es auch durchaus zweckmäßig sein, einen Teil des Dichtmaterials mit in das Holzmaterial einzubringen, so daß auch nach dem Eindrehen der Holzschraube zumindest in den oberen Gewindegängen Reste des Dichtmaterials verbleiben und eine weitere Sicherheit gegen eindringende Feuchtigkeit bilden. Zweckmäßig kann es auch sein, unter einem an Holzmaterial anzubringenden Element eine Dichtscheibe aus EPDM vorzusehen, die unmittelbar auf der Holzoberfläche aufliegt. Die Dichtscheibe verhindert das Eindringen von Feuchtigkeit bis zur Bohrung infolge von Kapillarwirkung, um die Sicherheit gegen eindringende Feuchtigkeit zu erhöhen. Vorzugsweise besitzt die Dichtscheibe im Ausgangszustand gar kein Durchgangsloch, d. h. die Schraube schneidet das Loch erst beim Eindrehen, oder es ist ein kleines Durchgangsloch vorgesehen, das vorzugsweise kleiner oder gleich dem Kerndurchmesser des Gewindeschafts der Schraube ist. Um eine gleichmäßige Andruckkraft der Scheibe an der Holzoberfläche zu erreichen, kann die Dichtscheibe auf eine Metallscheibe gleichen Durchmessers aufgeklebt sein, die dem anzubringenden Element zugewandt ist und ein Durchgangsloch zum Durchführen der Schraube aufweist.

## Patentansprüche

1. Verfahren zum Herstellen einer Verschraubung zum feuchtigkeitsdichten Anbringen von Elementen an Profilen, Hohlprofilen, Platten oder dergleichen, die z. B. aus Holz, Kunststoff, Aluminium oder anderen Metallen bestehen, wobei die Verschraubung wenigstens aus Schrauben (30), die im Gewinde- und/oder Schaftbereich wenigstens teilweise mit einer Beschichtung (38) versehen sind, dem anzubringenden Element (12, 26) und Einschraublöchern (32) besteht und entsprechend der Materialart Holz-, Blech- (30), Kunststoffschrauben oder selbstschneidende Schrauben unmittelbar an dem jeweiligen Gegenstand (34) eingeschraubt werden, **dadurch gekennzeichnet, daß** die Beschichtung (38) wenigstens im Gewindebereich in solchem zeitlichen Abstand vor der Nutzung aufgebracht wird, daß sie sich bei der Montage je nach Materialart der Beschichtung (38) in einem getrockneten, abgebundenen oder ausgehärteten Zustand befindet, wobei die Beschichtung (38) durch das Eindrehen der Schraube (30) am Rand des Einschraubloches (32) wenigstens teilweise abgeschabt wird und die abgelöste Beschichtung beim Eindrehen derart in diesem Bereich angesammelt wird, daß beim Festziehen der Schraube (30) der Bereich zwischen dem Schaft und dem Einschraubloch (32) und/oder dem anzubringenden Element (12, 26) abgedichtet wird.

2. Verfahren nach Anspruch 1, **dadurch gekennzeichnet, daß** die Beschichtung auf Silikonbasis hergestellt wird.

3. Verfahren nach Anspruch 1, **dadurch gekennzeichnet, daß** die Beschichtung (30) auf Polymerbasis, insbesondere auf der Basis von Polyacrylat hergestellt wird.

4. Verfahren nach Anspruch 1, **dadurch gekennzeichnet, daß** die Beschichtung auf der Basis von Harz, Teer oder Kautschuk hergestellt wird.

5. Verfahren nach einem der vorhergehenden Ansprüche, **dadurch gekennzeichnet, daß** die Beschichtung (38) nur über einen Teil der Länge des Schaftes ausgeführt wird.

6. Verfahren nach Anspruch 5, **dadurch gekennzeichnet, daß** die Beschichtung sich ungefähr über eine Länge von 20 mm erstreckt.

7. Verfahren nach Anspruch 5 oder 6, **dadurch gekennzeichnet, daß** der Anfang (36) der Beschichtung (38) zur Unterseite des Schraubenkopfes einen Abstand aufweist, der ungefähr der Dicke des anzubringenden Elements (26) entspricht.

8. Verfahren nach einem der Ansprüche 5 bis 7, **dadurch gekennzeichnet, daß** der Beginn (36) der Beschichtung (38) einen Abstand von ungefähr 5 mm zur Unterseite des Schraubenkopfes aufweist.

9. Verfahren nach einem der vorhergehenden Ansprüche, **dadurch gekennzeichnet, daß** die Schrauben (30) in ein Profil oder Hohlprofil eines Fensterrahmens oder einer Fassade eingedreht werden.

10. Verfahren nach einem der vorhergehenden Ansprüche, **dadurch gekennzeichnet, daß** ein Halter (12) für eine Führung, insbesondere eine Führungsschiene (14) einer Sonnenschutzanlage angebracht wird.

11. Verfahren nach einem der vorhergehenden Ansprüche, **dadurch gekennzeichnet, daß** wenigstens eine Holzschraube in Holzmaterial eingedreht wird, wobei Teile des Beschichtungsmaterials nach dem Eindrehen wenigstens in den oberen Gewindegängen vorhanden sind.

12. Verfahren nach einem der vorhergehenden Ansprüche, **dadurch gekennzeichnet, daß** unter einem an Holzmaterial anzubringenden Element eine Dichtscheibe aus EPDM unmittelbar auf der Holzoberfläche aufgelegt wird.

13. Verfahren nach Anspruch 12, **dadurch gekennzeichnet, daß** die Dichtscheibe vor dem Eindrehen der Schraube kein Durchgangsloch oder ein Durchgangsloch mit einem engen Durchmesser aufweist, der kleiner als der Außendurchmesser des Gewindeschafts der Schraube ist.

14. Verfahren nach Anspruch 13, **dadurch gekennzeichnet, daß** der Durchmesser des Durchgangsloches der Dichtscheibe kleiner oder gleich dem Kerndurchmesser des Gewindeschafts der Schraube ist.

15. Verfahren nach einem der Ansprüche 12 bis 14, **dadurch gekennzeichnet, daß** die EPDM-Dichtscheibe auf eine Metallscheibe aufgeklebt wird, die dem anzubringenden Element zugewandt ist und ein Durchgangsloch aufweist.

16. Verfahren nach einem der Ansprüche 12 bis 15, **dadurch gekennzeichnet, daß** die Dichtscheibe eine Stärke von wenigstens 4 mm, vorzugsweise 5 mm bis 7 mm, aufweist.

## Claims

1. Method of producing a threaded joint for moisture-impervious attachment of elements to profiles, hollow profiles, plates or the like which are composed, for example, of wood, plastic, aluminium or other metals, wherein the threaded joint at least comprises screws (30) which are provided in the thread and/or shaft region at least partially with a coating (38), the element (12, 26) to be attached and screw holes (32) and, according to the material type, wood, sheet metal (30), plastic screws or self-cutting screws are screwed directly onto the respective object (34), **characterised in that** the coating (38) at least in the thread region is applied at such a time prior to use that it is in a dried, hardened or cured state during assembly depending on the material type of the coating (38), wherein the coating (38) is at least partially scraped off by screwing in of the screw (30) at the edge of the screw hole (32) and the detached coating is accumulated in this region during screwing in such that the region between the shaft and the screw hole (32) and/or the element (12, 26) to be attached is sealed during tightening of the screw (30).

2. Method according to Claim 1, **characterised in that** the coating is produced on a silicon basis.

3. Method according to Claim 1, **characterised in that** the coating (30) is produced on a polymer basis, in particular on the basis of polyacrylate.

4. Method according to Claim 1, **characterised in that** the coating is produced on the basis of resin, tar or rubber.

5. Method according to one of the preceding claims, **characterised in that** the coating (38) is only applied across a part of the length of the shaft.

6. Method according to Claim 5, **characterised in that** the coating extends approximately across a length of 20 mm.

7. Method according to Claim 5 or 6, **characterised in that** the start (36) of the coating (38) has a distance to the underside of the screw head which approximately equals the thickness of the element (26) to be attached.

8. Method according to one of Claims 5 to 7, **characterised in that** the start (36) of the coating (38) has a distance of approximately 5 mm to the underside of the screw head.

9. Method according to one of the preceding claims, **characterised in that** the screws (30) are screwed into a profile or hollow profile of a window frame or a façade.

10. Method according to one of the preceding claims, **characterised in that** a holder (12) for a guide, in particular a guide rail (14) of a sun protection system is fitted.

11. Method according to one of the preceding claims, **characterised in that** at least one wood screw is screwed into wooden material, wherein parts of the coating material are present at least in the upper threads after screwing in.

12. Method according to one of the preceding claims, **characterised in that** a sealing disc made of EPDM is directly placed on the wooden surface below an element to be attached to wooden material.

13. Method according to Claim 12, **characterised in that**, prior to screwing in the screw, the sealing disc has no through hole or a through hole with a narrow diameter which is smaller than the outer diameter of the threaded shaft of the screw.

14. Method according to Claim 13, **characterised in that** the diameter of the through hole of the sealing disc is smaller than or equal to the core diameter of the threaded shaft of the screw.

15. Method according to one of Claims 12 to 14, **characterised in that** the EPDM sealing disc is glued onto a metal disc which faces the element to be attached and has a through hole.

16. Method according to one of Claims 12 to 15, **characterised in that** the sealing disc has a thickness of at least 4 mm, preferably 5 mm to 7 mm.

## Revendications

1. Procédé de fabrication d'un assemblage par vissage pour monter des éléments de manière étanche à l'humidité sur des profilés, profilés creux, plaques ou autres similaires, par exemple en bois, en matière plastique, en aluminium ou autres métaux, l'assemblage par vissage étant constitué au moins par des vis (30) qui sont pourvues au moins en partie d'un revêtement (38) dans la zone de leur filet et/ou de leur tige, par l'élément à monter (12, 26) et par des trous de vissage (32), et, selon le type de matériau, des vis en bois, en tôle (30), des vis en matière plastique ou autotaraudantes étant vissées directement sur l'objet respectif (34), **caractérisé en ce que** le revêtement (38) au moins dans la zone de filet est appliqué à une distance temporelle telle par rapport à l'utilisation que, lors du montage, selon le type de matériau du revêtement (38), celui-ci se trouve dans un état séché, de prise ou durci, le revêtement (38), du fait du vissage de la vis (30),se râpant, au moins au partie, au bord du trou de vissage (32) et le revêtement décollé s'accumulant de manière telle dans cette zone, lors du vissage, que la zone comprise entre la tige et le trou de vissage (32) et/ou l'élément à monter (12, 26) est rendue étanche lors du serrage à bloc de la vis (30).

2. Procédé selon la revendication 1, **caractérisé en ce que** le revêtement est fabriqué à base de silicone.

3. Procédé selon la revendication 1, **caractérisé en ce que** le revêtement est fabriqué à base de polymère, en particulier à base de polyacrylate.

4. Procédé selon la revendication 1, **caractérisé en ce que** le revêtement est fabriqué à base de résine, de goudron ou de caoutchouc.

5. Procédé selon l'une des revendications précédentes, **caractérisé en ce que** le revêtement (38) n'est réalisé que sur une partie de la longueur de la tige.

6. Procédé selon la revendication 5, **caractérisé en ce que** le revêtement s'étend environ sur une longueur de 20 mm.

7. Procédé selon la revendication 5 ou 6, **caractérisé en ce que** le début (36) du revêtement (38) présente, par rapport à la face inférieure de la tête de la vis, une distance qui correspond environ à l'épaisseur de l'élément à monter (26).

8. Procédé selon l'une des revendications 5 à 7, **caractérisé en ce que** le début (36) du revêtement (38) présente une distance d'environ 5 mm par rapport à la face inférieure de la tête de la vis.

9. Procédé selon l'une des revendications précédentes, **caractérisé en ce que** les vis (30) sont vissées dans un profilé ou profilé creux d'un châssis de fenêtre ou d'une façade.

10. Procédé selon l'une des revendications précédentes, **caractérisé en ce qu'**est montée une fixation (12) pour un guidage, en particulier un rail de guidage (14) d'une installation de protection solaire.

11. Procédé selon l'une des revendications précédentes, **caractérisé en ce qu'**au moins une vis à bois est vissée dans un matériau en bois, des parties du matériau du revêtement se trouvant au moins dans les pas de vis supérieurs après le vissage.

12. Procédé selon l'une des revendications précédentes, **caractérisé en ce qu'**un disque d'étanchéité en EPDM est appliqué directement sur la surface en bois en dessous d'un élément à monter sur un matériau en bois.

13. Procédé selon la revendication 12, **caractérisé en ce que** le disque d'étanchéité, avant le vissage de la vis, ne présente pas de trou de passage ou comporte un trou de passage avec un diamètre étroit qui est inférieur au diamètre extérieur de la tige filetée de la vis.

14. Procédé selon la revendication 13, **caractérisé en ce que** le diamètre du trou de passage du disque d'étanchéité est inférieur ou égal au diamètre du noyau de la tige filetée de la vis.

15. Procédé selon l'une des revendications 12 à 14, **caractérisé en ce que** le disque d'étanchéité en EPDM est collé sur un disque de métal qui est tourné vers l'élément à monter et comporte un trou de passage.

16. Procédé selon l'une des revendications 12 à 15, **caractérisé en ce que** le disque d'étanchéité présente une épaisseur d'au moins 4 mm, de préférence de 5 mm à 7 mm.
